# EUROPEAN PATENT SPECIFICATION

(11) **EP 2 578 426 B1**
(45) Date of publication and mention of the grant of the patent: **08.04.2015**
(21) Application number: 12186977.0
(22) Date of filing: 02.10.2012
(51) Int. Cl.: B60J 5/10, E05F 15/00

(54) **Vehicle with openable closure**
Fahrzeug mit öffnungsfähigem Schliesselement
Véhicule avec couvercle ouvrable

(30) Priority: 04.10.2011 GB 201117020
(43) Date of publication of application: 10.04.2013
(73) Proprietor: Nissan Motor Manufacturing (UK) Ltd., Cranfield Bedfordshire MK43 0DB (GB)
(72) Inventor: Linchyk, Alexandra, Cranfield, Bedfordshire MK430DB (GB)

(56) References cited:
- EP-A1- 1 188 892
- DE-A1-102008 032 733
- US-A1- 2007 262 609

## Description

### Technical Field of the Invention

The present invention relates to a vehicle having a closure, such as a tailgate or boot lid, and a system for opening the closure. The present invention also relates to a method of opening a closure on a vehicle.

A vehicle and a method of these types are known from EP 1188892 A.

### Background to the Invention

Many vehicles have interior luggage areas such as a boot or trunk, typically at the rear of the vehicle, in which items can be placed for transport. The luggage area is accessed through an opening in the main body of the vehicle; and a closure is mounted to the body for movement between closed and fully open positions. In a typical arrangement, the closure is attached to the body at or near one edge for generally pivotal movement between the closed and fully open positions; and a releasable latch mechanism is provided to hold the closure in the closed position.

Estate type vehicles, otherwise known as station wagons, and hatchback type vehicles for example have an interior luggage space at the rear which is closed by means of a tailgate. The tailgate is connected by hinges to the body along or close to its upper edge; and is opened by lifting the lower end of the tailgate upwardly. The tailgate is also often supported on the body by means of a pair of struts incorporating gas springs; which act as a counterbalance bias member to support the weight of the tailgate in the fully open position, so that it does not have to be manually held open whilst accessing the luggage area.

The counterbalance gas struts are usually configured so as to be capable of lifting the tailgate to the fully open position once the tailgate has been moved through an initial angle of movement from the closed position towards the fully open position past an over-centre or balance position. Below the balance position, the gas struts do not apply a sufficient lifting force to raise the tailgate. In some cases, the gas struts may be arranged to apply a force tending to close the tailgate. In order to open the tailgate, the user must first release the latch and then manually lift the tailgate through the initial angle of movement past the balance position before the gas struts move the tailgate to the fully open position. This can be very cumbersome when holding items to be placed in the luggage space. Even where the vehicle is fitted with a remotely actuatable latch release mechanism, the user will first have to activate the latch release, and then lift the tailgate through its initial angle of movement.

In another common example, a saloon or sedan type of vehicle has a boot or trunk at the rear of the vehicle which is closed by means of a boot lid. The boot lid is hinged to the vehicle body along a forward edge; and is opened by lifting a rear edge of the lid. The terms "forward" and "rear" in this context refer to the relative positions of the edges on the vehicle. The boot lid is supported on the body by means of a counterbalance bias member which holds the lid in the open position. The counterbalance bias member may be a mechanical spring, such as a torsion spring, or it may be in the form of one or more gas springs, usually in the form of struts.

In some arrangements, the counterbalance bias member of a boot lid is designed to work in the same manner as the gas struts of a tailgate in only lifting the boot lid to the open position after it has been manually moved through an initial angle of movement beyond the balance position. This gives rise to the same problems in opening the boot lid as discussed above in relation to a tailgate. In other arrangements, the counterbalance spring is configured to lift the lid from the closed position to the open position once the latch is released. This makes opening of the boot lid easier but still requires activation of the latch release mechanism. Furthermore, it has been found that the ability of counterbalance springs to lift a boot lid from the closed position can deteriorate over time; or may be less effective in certain conditions, so that the lid requires manual assistance to move it through its initial range of movement before the counterbalance spring is able to raise it to the fully opened position.

It is also known to provide actuator mechanisms for moving a closure between closed and fully opened positions. In some known mechanisms, a power actuator, such as an electric motor, is permanently connected to the closure through a gearbox and a link arrangement. The actuator mechanism is operable to open and close the tailgate without any manual assistance from the user. Whilst such actuator mechanisms overcome the problems inherent with manually lifted tailgates, the known mechanisms are relatively complex and expensive to manufacture. The known mechanisms are also quite large; making them difficult to package in a vehicle without compromising the load space. This is a particular issue for smaller vehicles.

There is a need then, for a vehicle having an alternative arrangement for opening a closure that overcomes, or at least mitigates, the drawbacks of the prior art.

In particular, there is a need for a vehicle having a system that allows for hands free opening of a closure, such as a tailgate or boot lid; but which is simpler, and therefore cheaper to manufacture and easier to package, than the known actuator mechanisms.

There is also a need for a method of opening a closure that overcomes, or at least mitigates, the disadvantages of the known methods.

### Summary of the Invention

According to a first aspect of the invention, there is provided a vehicle as defined in claim 1.

Further preferred features of the first aspect of the invention can be found in the claims dependent on claim 1.

According to a second aspect of the invention, there is provided a method of opening a closure on a vehicle as defined in claim 13.

Further preferred features of the second aspect of the invention can be found in claims 14 and 15.

### Detailed Description of the Invention

In order that the invention may be more clearly understood, an embodiment thereof will now be described, by way of example only, with reference to the accompanying drawings, of which:
Figure 1 is a perspective view illustrating a vehicle incorporating a tailgate opening system in accordance with a first embodiment of the invention;
Figure 2 is a view from the rear of the vehicle of Figure 1 with its tailgate open;
Figure 3 is a perspective view of an actuator unit forming part of the tailgate opening system of the vehicle of Figures 1 and 2;
Figures 4A and 4B are schematic views illustrating movement of a ram forming part of the actuator unit of Figure 3;
Figures 5A to 5C are a series of somewhat schematic views from the side of a tailgate forming part of the vehicle of Figures 1 and 2 and also showing the ram of the actuator unit of Figure 3 and one of a pair of gas struts supporting the tailgate, illustrating movement of the tailgate, actuator ram and gas strut at various stages during operation of the tailgate opening system.

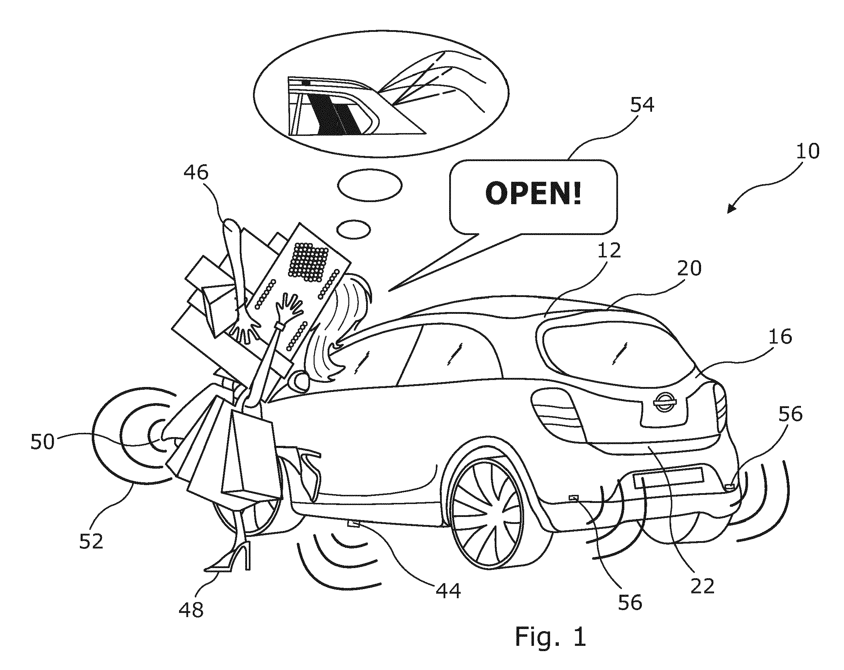

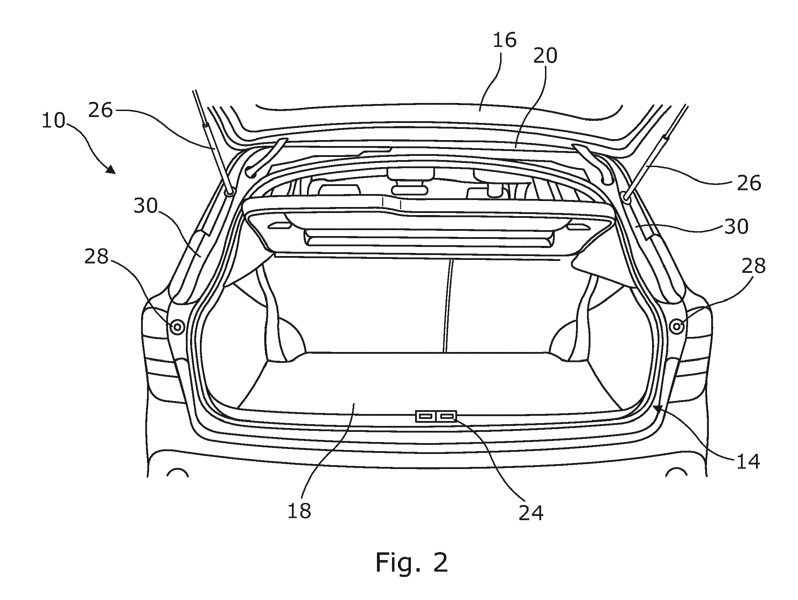

Referring to **Figures 1** **and** **2****,** a vehicle 10 in accordance with the invention comprises a body 12 having an opening 14 at a rear end and a closure 16 for the opening. The vehicle 10 in the present embodiment is a hatchback type vehicle having a luggage area or boot 18 inside the body, which can be accessed through the opening 14. The closure 16 is in the form of a tailgate which is hinged to the body at or close to an upper edge 20 thereof, for pivotal movement about a generally horizontal axis extending in a lateral direction of the vehicle. The tailgate 16 is movable between a closed position as shown in Figure 1, in which it closes the opening; and a fully open position as shown in Figure 2, in which a lower end 22 of the tailgate is raised to allow access to the luggage space 18 through the opening 14. The vehicle has a lockable latch mechanism 24 (only part of which is shown in Figure 2), as is well known in the art for releasably holding the tailgate 16 in the closed position.

It should be understood that terms such as "luggage area" and "luggage space" as used herein refer generally to any area or space in a vehicle such as a boot or trunk in which items can be placed for transport; including, but not limited to, luggage, shopping, parcels and the like.

The tailgate 16 is supported on either side by means of a strut 26 incorporating a gas spring, referred to generally as a gas strut. The gas struts 26 apply a counterbalance bias force to the tailgate 16 so as to support the weight of the tailgate, and to hold it in the fully open position. The gas struts 26 are configured so that they apply a force to the tailgate capable of lifting the tailgate 16 to the fully open position only after the tailgate has been moved through an initial angle or range of movement from the closed position toward the open position to a balance position. The balance position need not be a single angular position but may encompass a small arc of angle of movement of the tailgate; the precise balance point being dependent on a number of factors, such as vehicle interior temperature. When the tailgate is below the balance position, the gas struts 26 do not apply a lifting force to the tailgate (or at least, they only apply a force that is insufficient to overcome the weight of the tailgate), so that it does not unintentionally spring up when the tailgate latch is released.

Preferably, the gas struts are configured so that they do not apply a constant opening pressure on the tailgate 16 when it is in the closed position; as this might adversely affect the tailgate latch, and/or any sensing system for detecting when the tailgate is closed. Indeed, the gas struts 26 may be mounted with an over-centre arrangement such that when the tailgate is below an over-centre position, the gas struts apply a force to the tailgate tending to close the tailgate. In some arrangements, the tailgate may have separate balance and over-centre positions. In these arrangements, the tailgate has a balance position above which the gas springs are able to raise the tailgate to the fully open position; and an over-centre position lower than the balance position, below which the gas springs apply a closing force to the tailgate. In between the over-centre and balance positions, the gas springs do not apply a closing force to the tailgate; but do not apply sufficient lifting force to raise the tailgate against its own weight.

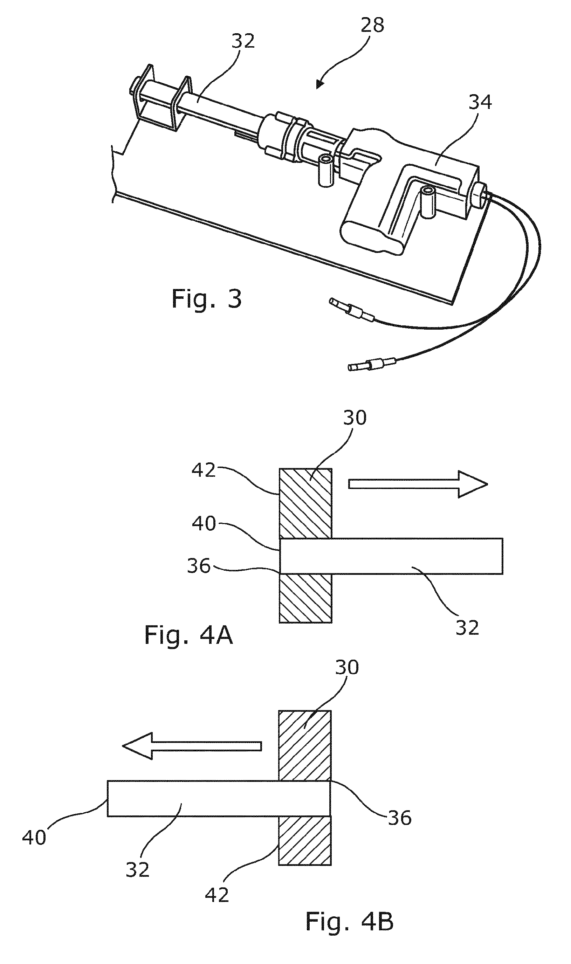

The vehicle 10 incorporates a tailgate opening system for opening the tailgate without manual assistance from a user. The tailgate opening system includes a pair of actuator units 28 located one on either side of the tailgate in body pillars 30 at the rear of the vehicle body that partially define the opening 14. As shown in **Figure 3****,** each actuator unit comprises a ram 32 and an actuator mechanism 34 for selectively extending the ram from an initial, retracted position as illustrated in **Figure** 4A to an extended position as illustrated in **Figure 4B**. The actuator mechanism can be of any suitable type including electrical, hydraulic or pneumatic. For convenience, in the present embodiment the actuator mechanism 34 is an electrical actuator mechanism powered from the vehicle's electrical system; and may be an electromechanical or electromagnetic actuator unit. The actuator mechanism may be single acting, in which case the actuator unit may incorporate a resilient bias means such as a spring to return the ram 32 to its retracted position; or the actuator mechanism may be double acting, and be operative to positively retract as well as to extend the ram.

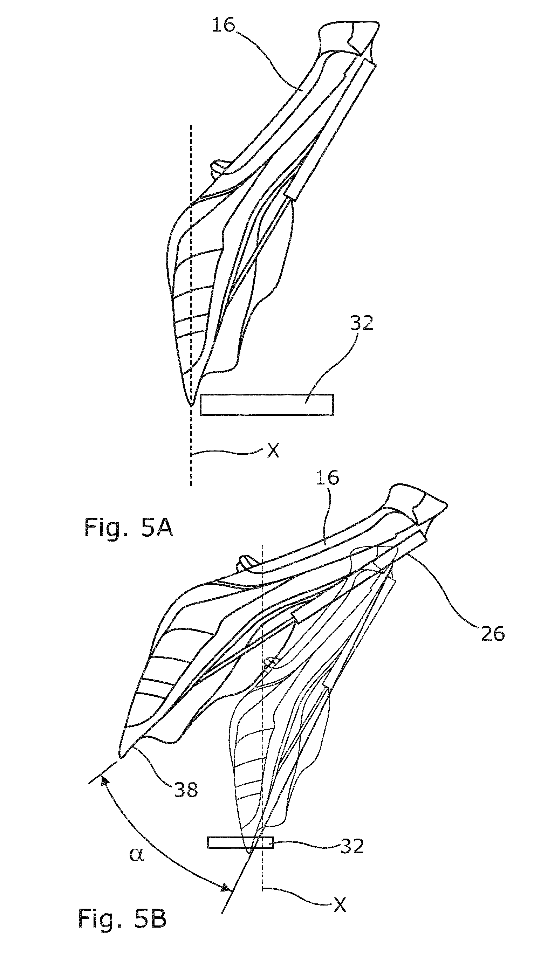

The actuator units 28 can be located at any suitable position in the body pillars 30; but advantageously, are located at a position between the lower edge 22 and the mid-point of the tailgate 16. The actuator mechanisms 34 are located between the vehicle body and its interior trim, with the rams 32 aligned generally horizontally in a longitudinal direction of the vehicle. The rams 32 pass through openings 36 (Fig. 4A) in the body pillars 30 for contact with an inner surface 38 (Fig. 5B) of the tailgate when extended. As shown in Figure 4A, when in their initial, retracted position, an outer end 40 of each ram 32 lies flush with or just inboard of an outer surface 42 of the body pillar 30 that opposes the inner surface 38 of the tailgate 16 when the tailgate is closed. Preferably, the distance between the outer ends 40 of the rams and the inner surface 38 of the tailgate 16 when the rams are in their initial position and the tailgate closed is kept to a minimum to reduce noise and shock when the rams 32 are extended and first contact the tailgate. Resilient pads (not shown) may be mounted on the inner surface 38 of the tailgate 16 where the rams 32 contact the tailgate to absorb the initial impact when the rams are extended, and to reduce impact noise. Alternatively, resilient pads may be mounted to the ends of the rams.

Activation of the actuator units 28 is controlled by a control system; which may be part of a vehicle control system that controls other functions of the vehicle, such as a remote and preferably "keyless" entry system arrangement. The lockable latch mechanism 24 which holds the tailgate closed includes remotely actuatable, powered latch release and un-lock mechanisms as is known in the art; and is also connected with the control system.

Operation of the tailgate opening system will now be described, with reference primarily to Figures 5A to 5C.

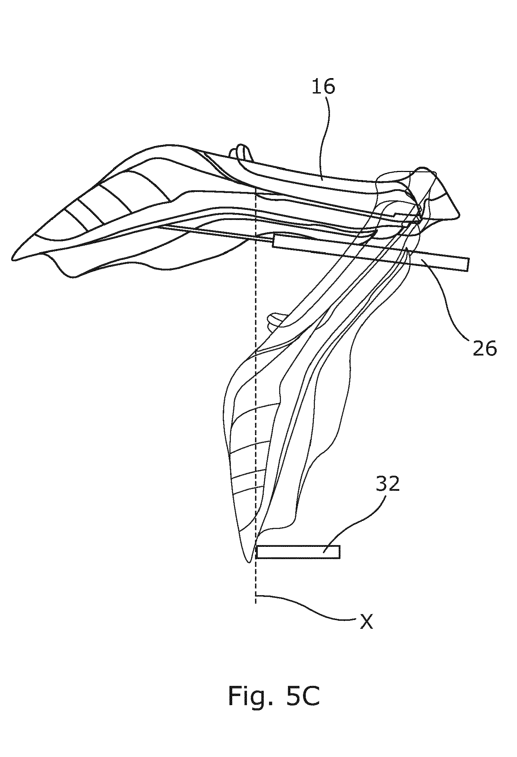

**Figure 5A** shows the tailgate in its closed position; with the actuator unit rams 32 in their initial, retracted positions. The latch mechanism 24 (not shown in Figure 5A) is engaged, and may also be locked. In response to an input indicative that the tailgate is to be opened, the control system activates the un-lock mechanism to un-lock the latch 24 (if necessary); and activates the power un-latch to release the tailgate 16. At the same time, or after a very short delay, the control system activates the actuator units 28 so that the rams 32 are advanced. As the rams 32 advance, they contact the inner surface 38 of the tailgate 16, applying sufficient force to push the tailgate 16 through its initial angle of opening α as illustrated in **Figure 5B**; moving the tailgate at least up to, and preferably slightly beyond, the balance position. Once the tailgate has moved through the initial angle of movement α, the gas struts 26 apply a lifting force to the tailgate 16; lifting it to the fully open position, and holding it there, as shown in **Figure 5C**. The rams 32 are retracted back to their initial positions once sufficient force has been applied to the tailgate 16 to move it through the initial angle of movement. The initial angle of movement α can be measured from any suitable datum on the tailgate around the tailgate hinge points (not shown). In the example illustrated in Figures 5B and 5C, the datum is taken as a point 38 on the inner surface of tailgate 16 where it is contacted by one of the rams 32. Dashed line X is a "zero line" showing the horizontal position of the end of ram 32 when it is retracted.

The initial angle or range of movement α that the tailgate has to be moved through by the rams 32 before the gas struts 26 are able to lift the tailgate 16 to the fully open position will vary from vehicle type to vehicle type depending on a range of factors including the size and weight of the tailgate, the spring rating of the gas struts 26, and the overall geometry. Similarly, the force required to move the tailgate through the initial angle of movement will also vary from vehicle type to vehicle type dependent on the same factors; and should be calculated taking into account the effect that the gas struts 26 may have in dampening the movement; or indeed in opposing the movement, where they are configured to apply a closing force to the tailgate when it is below the over-centre position.

The tailgate opening system thus allows the tailgate 16 to be opened without a user having to manually release the tailgate latch 24, nor to apply any lifting force to the tailgate 16. The tailgate is closed in a conventional manner. Because the actuators 28 only have to move the tailgate to a partially open position, at which the struts 26 are able to lift the tailgate - and are not required to be able to close the tailgate 16 - they do not have to be permanently attached to the tailgate, either directly or through a linkage. This considerably simplifies the tailgate opening system when compared with the known actuator arrangements. This reduces manufacturing costs and complexity. Furthermore, the arrangement allows for use of smaller actuators, that can be more easily packaged within the available space between the body and trim panels of the vehicle; without overly compromising the load space. It will be appreciated that the actuators 28 may be arranged to move the tailgate to a partially open position that is slightly beyond the balance point at which the gas struts 26 are able to lift the tailgate; to provide for a margin of error, and for different operating conditions.

The control system may comprise a controller (not shown), which controls operation of the latch release mechanism and of the actuators, in accordance with a predefined logic sequence and in response to one or more inputs. The controller may be a programmable controller; and may be part of a central control unit of the vehicle. Various different arrangements can be used to provide suitable inputs to the controller to initiate opening of the tailgate. In one possible embodiment, a remote control unit (not shown) can be provided for activation by the user to provide the required input to the controller which is on-board the vehicle. The remote control unit may be part of a key, key fob or keyless entry device with a button or other input means which when activated sends a signal to the on-board controller to open the tailgate. Such an arrangement has the advantage that it is relatively simple to execute; but it still requires the user to have a hand free to activate the remote control.

It would be advantageous, therefore, to provide a completely hands-free method of activating the tailgate opening system. One suitable arrangement includes a sensor 44 (Figure 1) located on the vehicle for detecting an input action by the user 46, indicating that they wish to open the tailgate. The sensor 44 could be a motion sensor for detecting a particular motion of the user at a particular location adjacent the vehicle. Such a motion sensor 44 may, for example, be fitted towards the rear of the vehicle and arranged to detect movement of a user's foot 48 being waved in close proximity to the vehicle. The sensor 44 could be located underneath the vehicle, so that the user must wave their foot under the vehicle within range of the sensor at a position that is relatively easy to get to; but where movement would not usually be expected when the vehicle is stationary. Preferably, the sensor 44 is located so that the user is not at risk of being hit by the tailgate when it opens.

In order to reduce the risk of the tailgate opening system being activated unintentionally, the controller may require more than one input and/or a particular sequence of inputs. For example, where the system includes a motion sensor 44 for detecting an input action such as a movement of the user, the controller may be configured to activate the tailgate opening sequence only when the sensor is activated two or three times with a minimum and/or maximum delay between each activation.

Alternatively, where the vehicle is fitted with a keyless entry system, use can be made of the entry system in combination with a secondary input, to instruct the controller to cause the tailgate to open. In one example, the control system incorporates means (not shown) for detecting the proximity of a keyless entry device 50, such as an electronic key, carried by the user. The controller is configured to cause the tailgate to open when a keyless entry device 50 appropriately associated with the vehicle is detected within a given proximity of the vehicle, and a secondary input is received. The secondary input may be provided by a motion sensor 44 as discussed above.

Preferably, the proximity detection arrangement is able to distinguish the position of the keyless entry device 50 relative to the vehicle; and the controller is configured to cause the tailgate 16 to open only when the keyless entry device 50 is detected as being within a set distance from the motion sensor 44 when the secondary input is received. Accordingly, where the motion detector 44 is located towards the rear of the vehicle, the proximity detecting arrangement is configured so that it can detect when the keyless entry device 50 is located proximal to the rear of the vehicle, close to the motion detector 44; and is configured to then provide an appropriate input to the controller. This reduces the risk of the tailgate 16 being unintentionally opened when the user approaches the driver's door at the front of the vehicle 10 due to movement, say of a cat, within the field of the motion detector 44. Keyless entry devices generally emit a signal 52 that is detected when in range of a receiver on the vehicle. This signal can be used to determine the proximity of the device 50, and its location relative to the vehicle, and to the sensor 44.

The control system may be configured so that the motion sensor 44 is only activated once the controller has detected the presence of the keyless entry device 50 proximal to the vehicle 10; and more particularly proximal to the motion sensor 44. This will also reduce the risk of the tailgate 16 being opened unintentionally; and will help to conserve power, as the motion sensor 44 need not be permanently active. The motion sensor 44 can be of any suitable type; but conveniently, may be an ultrasonic sensor. The motion sensor 44 may be a dedicated sensor for the tailgate opening system; or it may also function as a parking sensor.

In addition, or as an alternative, to the motion sensor, the control system may incorporate a voice activated sensor (not shown) to provide an input to the controller to initiate a tailgate opening sequence in response to a user's voice command 54 (Figure 1). The controller may be configured to respond to an output from the voice activated sensor that corresponds with a pre-defined vocal command such as "open" or some other suitable command word or phrase 54. The controller may also require one or more additional inputs before it causes the tailgate to open; such as an output from a motion sensor 44 and/or an input indicative that a keyless entry device 50 associated with the vehicle has been detected; both as discussed above.

The control system may also incorporate one or more proximity sensors 56 to detect when an obstacle is present which could prevent safe opening of the tailgate 16. In this case, the controller is configured so that it will not cause the tailgate to open by activating the actuator units and/or the latch release mechanism when an obstacle is detected. The controller may be configured to trigger an alarm or other indicator to notify the user that tailgate opening has been inhibited. The, or each, proximity sensor 56 may be an ultrasonic sensor and may be dedicated to the tailgate opening system; or may also function as a parking sensor. To conserve power, the proximity sensor(s) may only be activated once the control system has received a verified input to initiate a tailgate opening sequence; but prior to the control system releasing the tailgate latch 24 and activating the actuators 28.

The control system may also comprise a sensor (not shown) to detect when the tailgate is closed. The controller may then be configured so that it will only cause the tailgate 16 to open when the sensor provides an input indicating that the tailgate is closed - irrespective of whether the tailgate is locked or unlocked. Thus the control system may be configured so that the tailgate 16 is opened only when an authorised keyless entry device 50 is detected in an appropriate location relative to the vehicle; an input is received from the motion sensor 44 (or other secondary input device); the tailgate 16 is closed; and no obstacle preventing safe opening of the tailgate is detected. Where a voice activated sensor is also provided, the control system will also require a suitable voice command before the tailgate is opened. As a further precaution, the control system may be configured to inhibit opening of the tailgate when the engine is running.

Whilst the invention has been described in relation to a vehicle having a tailgate 16, the invention can be equally applied to vehicle closures of other types, including boot or trunk lids, that are raised to a fully open position by one or more counterbalance bias members once they have been moved through an initial range of movement. Furthermore, the invention is not limited to application with closures in which the counterbalance bias member comprises one or more gas struts 26; but can be modified for use with closures having other counterbalance bias arrangements such as torsion springs or torsion rods.

The above embodiment is described by way of example only. Many variations are possible without departing from the scope of the invention as defined in the appended claims. For example, the actuator arrangement need not comprise an extendable ram for imparting a force to the closure to move it through its initial range of movement but can use any suitable arrangement for imparting a force such as magnetic repulsion. It is preferable though, that the actuator or actuators is/are not permanently connected with the closure, to simplify construction and operation of the system.

Also, there are many variables in the performance of a gas strut closure opening system - due to leakage of gas over time, variation in gas pressure due to ambient temperature, and weight of the closure due to settled snow, to name but three such variables. There may, therefore, be some variation in the location of the balance point beyond which a vehicle user can be sure that the closure will open without manual assistance. The point at which opening of the closure is certain (the partially open position at which the at least one counter balance bias member is able to raise the closure to its fully open position) may be called a "post-balance position", an "assured lift position", or a "tipping point".

It may be considered desirable to offer some adjustment in the stroke of the actuator mechanism, so that opening of the closure is assured in winter, but not overpowered in summer. Such adjustment may be manually switched or automatic. Automatic adjustment of the actuator stroke could be dependent, for example, on signals from an ambient temperature thermometer, or from a vehicle interior temperature thermometer.

## Claims

1. A vehicle (10) having a body (12) defining an opening (14), a closure (16) mounted to the body for movement between a closed position in which it closes the opening (14) and a fully open position in which an interior space (18) in the vehicle body can be accessed through the opening (14), and a support structure for supporting the closure (16) on the body (12);
the support structure including at least one counter balance bias member (26) for holding the closure in the fully open position, the at least one counter balance bias member (26) being capable of moving the closure (16) against its own weight to the fully open position only once the closure (16) has moved through an initial range of movement from the closed position towards the fully open position, and a latch (24) for selectively holding the closure in the closed position;
**characterised in that** the vehicle (10) has a system for opening the closure (16), the system comprising a remotely actuatable release mechanism for the latch (24); **characterized in that** the vehicle (10) also comprising:
an actuator arrangement (28) capable of moving the closure (16) from its closed position only as far as a partially open position at which the at least one counter balance bias member (26) is able to raise the closure (16) to its fully open position, and a control system configured to cause the closure (16) to open by activating the latch (24) release mechanism to un-latch the closure, and by activating the actuator arrangement (28) to move the closure (16) from its closed position to said partially open position in response to an input indicative that the closure is to be opened.

2. A vehicle (10) as claimed in claim 1, wherein the actuator arrangement (28) is configured to impart a force to the closure (16) of sufficient magnitude and direction to move the closure to said partially open position.

3. A vehicle (10) as claimed in claim 1 or claim 2, wherein the actuator arrangement (28) comprises an abutment member for contacting the closure (16) to move the closure to said partially open position, the abutment member being separable from the closure (16) at least when the closure moves beyond said partially open position towards the fully open position.

4. A vehicle (10) as claimed in any one of the preceding claims, wherein the actuator arrangement (28) comprises at least one actuator unit mounted to the vehicle body (12), the actuator unit having a ram (32) extendable from a retracted position for contact with the closure (16).

5. A vehicle (10) as claimed in claim 4, wherein the at least one actuator ram (32) is retractable once a force of sufficient magnitude and direction to move the closure (16) from the closed position to said partially open position has been applied to the closure (16), without inhibiting continued opening motion of the closure.

6. A vehicle (10) as claimed in any one of the preceding claims, wherein the control system comprises a user input device and a controller, the controller being configured to cause the closure (16) to open in response to an output from the user input device; **characterized in that** the user input device comprises a remote control unit (50) that can be carried by a user for sending a signal (52) to the controller on-board the vehicle.

7. A vehicle (10) as claimed in claim 6, wherein the user input device comprises a sensor on the vehicle (10) for detecting an input action of a user.

8. A vehicle (10) as claimed in claim 7, wherein the sensor comprises a motion sensor (44) located on the vehicle (10) for detecting motion of a user's foot moved within the range of the sensor (44).

9. A vehicle (10) as claimed in claim 7, wherein the sensor comprises a voice sensor configured to detect sound, the controller being configured in use to cause the closure (16) to open in response to an output from the voice sensor indicative of a pre-selected vocal command (54).

10. A vehicle (10) as claimed in any one of claims 6 to 9, wherein the vehicle has a keyless entry system and the control system includes a means for detecting the proximity of a keyless entry device (50), the controller being configured in use to cause the closure (16) to open in response to an output from the user input device only when a keyless entry device (50) appropriately associated with the vehicle (10) is simultaneously detected.

11. A vehicle (10) as claimed in any one of the preceding claims, wherein the control system includes one or more proximity sensors (56) for detecting obstacles within the path of movement of the closure (16) from the closed to the fully open position, the controller being configured such that it does not operate to cause the closure (16) to open when an obstacle is detected.

12. A vehicle (10) as claimed in any one of the preceding claims, wherein the closure (16) is a tailgate and the at least one counter balance bias member comprises a pair of struts (26), each strut having a gas spring.

13. A method of opening a closure (16) on a vehicle (10), wherein the vehicle has a body (12) defining an opening (14), a closure (16) mounted to the body (12) for movement between a closed position in which it closes the opening (14) and a fully open position in which an interior space (18) in the vehicle body (12) can be accessed through the opening, and a support structure for supporting the closure (16) on the body (12);
the support structure including at least one counter balance bias member (26) for holding the closure (16) in the fully open position, the at least one counter balance bias member (26) being capable of moving the closure (16) against its own weight to the fully open position only once the closure (16) has moved through an initial range of movement from the closed position towards the fully open position, and a latch (24) for selectively holding the closure (16) in the closed position, **characterised in that** the method comprises the steps:
providing a remotely actuatable release mechanism for the latch (24);
providing an actuator arrangement (28) capable of moving the closure (16) from its closed position only as far as a partially open position at which the at least one counter balance bias member (26) is able to raise the closure (16) to its fully open position, and a control system including a controller for controlling activation of the latch (24) release mechanism and the actuator arrangement (28);
the method further including the steps of using the controller to cause the closure (16) to be opened by activating the latch (24) release mechanism to un-latch the closure (16) and activating the actuator arrangement (28) to move the closure (16) from its closed position to said partially open position in response to an input indicative that the closure (16) is to be opened;
and allowing the closure (16) to be raised from the partially open position to the fully open position exclusively by the at least one counter balance bias member (26).

14. A method of opening a closure (16) on a vehicle (10) as claimed in claim 13, wherein the actuator arrangement comprises at least one actuator unit (28) mounted to the vehicle body (12) and having a ram (32) extendable from a retracted position for contact with the closure (16).

15. A method of opening a closure (16) on a vehicle (10) as claimed in claim 13 or claim 14, wherein the control system comprises a user input device connected with the controller, the method comprising using the controller to cause the closure (16) to open in response to an output from the user input device; **characterized in that** the user input device comprises a remote control unit (50) that can be carried by a user for sending a signal (52) to the controller on-board the vehicle (10), the method comprising activating the remote control unit (50) to send a signal (52) to the controller.

## Patentansprüche

1. Fahrzeug (10), Folgendes umfassend: eine Karosserie (12), die eine Öffnung (14) definiert, ein Schließelement (16), das an der Karosserie befestigt ist, um sich zwischen einer geschlossenen Position, in der es die Öffnung (14) schließt, und einer vollständig geöffneten Position, in der ein Innenraum (18) in der Fahrzeugkarosserie durch die Öffnung (14) hindurch zugänglich ist, zu bewegen, und eine Stützanordnung zum Stützen des Schließelements (16) an der Karosserie (12);
wobei die Stützanordnung Folgendes umfasst: wenigstens ein Gegengewicht-Vorspannelement (26) zum Halten des Schließelements in der vollständig geöffneten Position, wobei das wenigstens eine Gegengewicht-Vorspannelement (26) in der Lage ist, das Schließelement (16) erst dann gegen sein eigenes Gewicht in die vollständig geöffnete Position zu bewegen, wenn sich das Schließelement (16) von der geschlossenen Position über ein anfängliches Bewegungsmaß in Richtung der vollständig geöffneten Position bewegt hat, und ein Schloss (24) zum selektiven Halten des Schließelements in der geschlossenen Position;
**dadurch gekennzeichnet, dass** das Fahrzeug (10) ein System zum Öffnen des Schließelements (16) umfasst, wobei das System einen aus der Ferne auslösbaren Freigabemechanismus für das Schloss (24) umfasst; **dadurch gekennzeichnet, dass** das Fahrzeug (10) ferner Folgendes umfasst:
eine Betätigungsanordnung (28), in der Lage, das Schließelement (16) aus seiner geschlossenen Position nur bis in eine teilweise geöffnete Position zu bewegen, bei der das wenigstens eine Gegengewicht-Vorspannelement (26) in der Lage ist, das Schließelement (16) in seine vollständig geöffnete Position zu bewegen, und ein Steuersystem, konfiguriert, um zu veranlassen, dass das Schließelement (16) sich öffnet, indem der Freigabemechanismus des Schlosses (24) aktiviert wird, um das Schließelement zu entriegeln, und durch Aktivieren der Betätigungsanordnung (28) das Schließelement (16) aus seiner geschlossenen Position in die teilweise geöffnete Position zu versetzen, als Reaktion auf eine Eingabe, die angibt, dass das Schließelement geöffnet werden soll.

2. Fahrzeug (10) nach Anspruch 1, wobei die Betätigungsanordnung (28) konfiguriert ist, eine Kraft auf das Schließelement (16) von ausreichender Kraft und Richtung aufzubringen, um das Schließelement in die teilweise geöffnete Position zu bewegen.

3. Fahrzeug (10) nach Anspruch 1 oder 2, wobei die Betätigungsanordnung (28) ein Anschlagelement umfasst, zum Berühren des Schließelements (16), um das Schließelement in die teilweise geöffnete Position zu bewegen, wobei das Anschlagelement vom Schließelement (16) wenigstens dann lösbar ist, wenn sich das Schließelement über die teilweise geöffnete Position hinaus in Richtung der vollständig geöffneten Position bewegt.

4. Fahrzeug (10) nach einem der vorhergehenden Ansprüche, wobei die Betätigungsanordnung (28) wenigstens ein Betätigungseinheit umfasst, die an der Fahrzeugkarosserie (12) befestigt ist, wobei die Betätigungseinheit einen Presskolben (32) aufweist, der aus einer zurückgezogenen Position zum Berühren des Schließelements (16) ausfahrbar ist.

5. Fahrzeug (10) nach Anspruch 4, wobei der wenigstens eine Presskolben (32) einfahrbar ist, sobald eine Kraft von ausreichender Stärke und Richtung, um das Schließelement (16) aus der geschlossenen Position in die teilweise geöffnete Position zu bewegen, auf das Schließelement (16) aufgebracht wird, ohne die fortfahrende Öffnungsbewegung des Schließelements zu behindern.

6. Fahrzeug (10) nach einem der vorhergehenden Ansprüche, wobei das Steuersystem ein Benutzereingabegerät und ein Steuergerät umfasst, wobei das Steuergerät konfiguriert ist, um zu veranlassen, dass das Schließelement (16) als Reaktion auf eine Ausgabe aus dem Benutzereingabegerät öffnet; **dadurch gekennzeichnet, dass** das Benutzereingabegerät eine Fernsteuerungseinheit (50) umfasst, die von einem Benutzer getragen werden kann, um ein Signal (52) an das Steuergerät im Fahrzeug zu senden.

7. Fahrzeug (10) nach Anspruch 6, wobei das Benutzereingabegerät einen Sensor im Fahrzeug (10) umfasst, um einen Eingabevorgang eines Benutzers zu erfassen.

8. Fahrzeug (10) nach Anspruch 7, wobei der Sensor einen Bewegungssensor (44) im Fahrzeug (10) umfasst, um die Bewegung eines Fußes eines Benutzers innerhalb des Bereichs des Sensors (44) zu erfassen.

9. Fahrzeug (10) nach Anspruch 7, wobei der Sensor einen Sprachsensor umfasst, konfiguriert, um Schall zu erfassen, wobei das Steuergerät konfiguriert ist, im Gebrauch das Schließelement (16) zu veranlassen, als Reaktion auf eine Ausgabe vom Stimmsensor, die auf einen zuvor gewählten Sprachbefehl (54) deutet, zu öffnen.

10. Fahrzeug (10) nach einem der Ansprüche 6 bis 9, wobei das Fahrzeug ein Keyless-Entry-System aufweist und das Steuersystem ein Mittel zum Erfassen der Nähe einer Keyless-Entry-Vorrichtung (50) umfasst, wobei das Steuergerät konfiguriert ist, im Gebrauch das Schließelement (16) zu veranlassen, als Reaktion auf eine Ausgabe eines Benutzereingabegeräts nur dann zu öffnen, wenn gleichzeitig eine angemessen mit dem Fahrzeug (10) verknüpfte Keyless-Entry-Vorrichtung (50) erfasst worden ist.

11. Fahrzeug (10) nach einem der vorhergehenden Ansprüche, wobei das Steuersystem einen oder mehrere Näherungssensoren (56) umfasst, um Hindernisse im Bewegungspfad des Schließelements (16) von der geschlossenen in die vollständig geöffnete Position zu erfassen, wobei das Steuergerät derart konfiguriert ist, dass es nicht funktioniert, um das Schließelement (16) zum Öffnen zu veranlassen, wenn ein Hindernis erfasst wird.

12. Fahrzeug (10) nach einem der vorhergehenden Ansprüche, wobei das Schließelement (16) eine Heckklappe ist und das wenigstens ein Gegengewicht-Vorspannelement ein Paar Streben (26) aufweist, wobei jede Strebe eine Gasfeder aufweist.

13. Verfahren zum Öffnen eines Schließelements (16) in einem Fahrzeug (10), wobei das Fahrzeug Folgendes umfasst: eine Karosserie (12), die eine Öffnung (14) definiert, ein Schließelement (16), das an der Karosserie (12) befestigt ist, um sich zwischen einer geschlossenen Position, in der es die Öffnung (14) schließt, und einer vollständig geöffneten Position, in der ein Innenraum (18) in der Fahrzeugkarosserie (12) durch die Öffnung hindurch zugänglich ist, zu bewegen, und eine Stützanordnung zum Stützen des Schließelements (16) an der Karosserie (12);
wobei die Stützanordnung Folgendes umfasst: wenigstens ein Gegengewicht-Vorspannelement (26) zum Halten des Schließelements (16) in der vollständig geöffneten Position, wobei das wenigstens eine Gegengewicht-Vorspannelement (26) in der Lage ist, das Schließelement (16) erst dann gegen sein eigenes Gewicht in die vollständig geöffnete Position zu bewegen, wenn sich das Schließelement (16) von der geschlossenen Position über ein anfängliches Bewegungsmaß in Richtung der vollständig geöffneten Position bewegt hat, und ein Schloss (24) zum selektiven Halten des Schließelements (16) in der geschlossenen Position, **dadurch gekennzeichnet, dass** das Verfahren die folgenden Schritte umfasst:
Bereitstellen eines aus der Ferne zu betätigenden Freigabemechanismus für das Schloss (24);
Bereitstellen einer Betätigungsanordnung (28), die in der Lage ist, das Schließelement (16) von seiner geschlossenen Position nur bis zu einer teilweise geöffneten Position zu bewegen, in der das wenigstens eine Gegengewicht-Vorspannelement (26) in der Lage ist, das Schließelement (16) in seine vollständig geöffnete Position anzuheben, und ein Steuersystem mit einem Steuergerät zum Steuern der Aktivierung des Freigabemechanismus für das Schlosses (24) und der Betätigungsanordnung (28);
wobei das Verfahren ferner die folgenden Schritte umfasst: Einsetzen des Steuergeräts, um das Schließelement (16) zum Öffnen zu veranlassen, indem der Freigabemechanismus für das Schloss (24) veranlasst wird, das Schließelement zu entriegeln (16) und Aktivieren der Betätigungsanordnung (28), um das Schließelement (16) aus seiner geschlossenen Position in die teilweise geöffnete Position zu bewegen, als Reaktion auf eine Eingabe, die angibt, dass das Schließelement geöffnet werden soll;
und Zulassen, dass das Schließelement (16) ausschließlich von dem wenigstens einen Gegengewicht-Vorspannelement (26) aus der teilweise geöffneten Position in die vollständig geöffnete Position angehoben wird.

14. Verfahren zum Öffnen eines Schließelements (16) an einem Fahrzeug (10) nach Anspruch 13, wobei die Betätigungsanordnung wenigstens eine Betätigungseinheit (28) umfasst, die an der Fahrzeugkarosserie (12) angebracht ist und einen Presskolben (32) aufweist, der aus einer zurückgezogenen Position zum Berühren des Schließelements (16) ausfahrbar ist.

15. Verfahren zum Öffnen eines Schließelements (16) an einem Fahrzeug (10) nach Anspruch 13 oder 14, wobei das Steuersystem ein Benutzereingabegerät umfasst, das mit dem Steuergerät verbunden ist, wobei das Verfahren das Einsetzen des Steuergeräts umfasst, um das Schließelement (16) zu veranlassen, als Reaktion auf eine Ausgabe vom Benutzereingabegerät zu öffnen; **dadurch gekennzeichnet, dass** das Benutzereingabegerät eine Fernsteuerungseinheit (50) umfasst, die von einem Benutzer getragen werden kann, um ein Signal (52) zum Steuergerät im Fahrzeug (10) zu senden, wobei das Verfahren das Aktivieren der Fernsteuerungseinheit (50) umfasst, um ein Signal (52) an das Steuergerät zu senden.

## Revendications

1. Véhicule (10) comportant une carrosserie (12) définissant une ouverture (14), une fermeture (16) montée sur la carrosserie pour un mouvement entre une position fermée dans laquelle il ferme l'ouverture (14) et une position pleinement ouverte dans laquelle on peut accéder à un espace intérieur (18) dans la carrosserie du véhicule à travers l'ouverture (14), et une structure de support permettant de supporter la fermeture (16) sur la carrosserie (12) ;
la structure de support incluant au moins un élément de sollicitation de contrepoids (26) permettant de maintenir la fermeture dans la position pleinement ouverte, le au moins un élément de sollicitation de contrepoids (26) étant capable de déplacer la fermeture (16) contre son propre poids vers la position pleinement ouverte seulement une fois que la fermeture (16) s'est déplacée sur une amplitude de mouvement initiale de la position fermée vers la position pleinement ouverte, et un verrou (24) permettant de maintenir sélectivement la fermeture dans la position fermée ;
**caractérisé en ce que** le véhicule (10) comporte un système permettant d'ouvrir la fermeture (16), le système comprenant un mécanisme de libération actionnable à distance pour le verrou (24) ;
**caractérisé en ce que** le véhicule (10) comprend également :
un agencement d'actionneur (28) capable de déplacer la fermeture (16) de sa position fermée seulement dans la mesure où une position partiellement ouverte à laquelle le au moins un élément de sollicitation de contrepoids (26) est capable de soulever la fermeture (16) vers sa position pleinement ouverte, et un système de commande configuré pour amener la fermeture (16) à s'ouvrir en activant le mécanisme de libération du verrou (24) pour déverrouiller la fermeture, et en activant l'agencement d'actionneur (28) pour déplacer la fermeture (16) de sa position fermée vers ladite position partiellement ouverte en réponse à une entrée indiquant que la fermeture doit s'ouvrir.

2. Véhicule (10) selon la revendication 1, dans lequel l'agencement d'actionneur (28) est configuré pour communiquer une force à la fermeture (16) de grandeur et de direction suffisantes pour déplacer la fermeture vers ladite position partiellement ouverte.

3. Véhicule (10) selon la revendication 1 ou la revendication 2, dans lequel l'agencement d'actionneur (28) comprend un élément de butée permettant de venir en contact avec la fermeture (16) pour déplacer la fermeture vers ladite position partiellement ouverte, l'élément de butée pouvant être séparé de la fermeture (16) au moins lorsque la fermeture se déplace au-delà de ladite position partiellement ouverte vers la position pleinement ouverte.

4. Véhicule (10) selon l'une quelconque des revendications précédentes, dans lequel l'agencement d'actionneur (28) comprend au moins une unité d'actionneur montée sur la carrosserie de véhicule (12), l'unité d'actionneur comportant un vérin (32) pouvant être déployé depuis une position rétractée pour contact avec la fermeture (16).

5. Véhicule (10) selon la revendication 4, dans lequel le au moins un vérin d'actionneur (32) peut être rétracté une fois qu'une force de grandeur et de direction suffisantes pour déplacer la fermeture (16) de la position fermée à ladite position partiellement ouverte a été appliquée à la fermeture (16), sans empêcher un mouvement d'ouverture continu de la fermeture.

6. Véhicule (10) selon l'une quelconque des revendications précédentes, dans lequel le système de commande comprend un dispositif d'entrée utilisateur et une unité de commande, l'unité de commande étant configurée pour amener la fermeture (16) à s'ouvrir en réponse à une sortie provenant du dispositif d'entrée utilisateur ; **caractérisé en ce que** le dispositif d'entrée utilisateur comprend une unité de télécommande (50) qui peut être portée par un utilisateur pour envoyer un signal (52) à l'unité de commande à bord du véhicule.

7. Véhicule (10) selon la revendication 6, dans lequel le dispositif d'entrée utilisateur comprend un capteur sur le véhicule (10) permettant de détecter une action d'entrée d'un utilisateur.

8. Véhicule (10) selon la revendication 7, dans lequel le capteur comprend un capteur de mouvement (44) situé sur le véhicule (10) pour détecter le mouvement du pied d'un utilisateur déplacé dans la portée du capteur (44).

9. Véhicule (10) selon la revendication 7, dans lequel le capteur comprend un capteur vocal configuré pour détecter un son, l'unité de commande étant configurée en utilisation pour amener la fermeture (16) à s'ouvrir en réponse à une sortie provenant du capteur vocal indiquant un ordre vocal présélectionné (54).

10. Véhicule (10) selon l'une quelconque des revendications 6 à 9, dans lequel le véhicule a un système d'entrée sans clé et le système de commande inclut un moyen permettant de détecter la proximité d'un dispositif d'entrée sans clé (50), l'unité de commande étant configuré en utilisation pour amener la fermeture (16) à s'ouvrir en réponse à une sortie du dispositif d'entrée utilisateur seulement lorsqu'un dispositif d'entrée sans clé (50) associé de manière appropriée au véhicule (10) est simultanément détecté.

11. Véhicule (10) selon l'une quelconque des revendications précédentes, dans lequel le système de commande inclut un ou plusieurs capteurs de proximité (56) permettant de détecter des obstacles dans la trajectoire de mouvement de la fermeture (16) de la position fermée à la position pleinement ouverte, l'unité de commande étant configurée de telle sorte qu'elle ne fonctionne pas pour amener la fermeture (16) à s'ouvrir lorsqu'un obstacle est détecté.

12. Véhicule (10) selon l'une quelconque des revendications précédentes, dans lequel la fermeture (16) est un hayon et le au moins un élément de sollicitation de contrepoids comprend une paire de contre-fiches (26), chaque contre-fiche ayant un ressort à gaz.

13. Procédé d'ouverture d'une fermeture (16) sur un véhicule (10), dans lequel le véhicule comporte une carrosserie (12) définissant une ouverture (14), une fermeture (16) montée sur la carrosserie (12) pour un mouvement entre une position fermée dans laquelle il ferme l'ouverture (14) et une position pleinement ouverte dans laquelle on peut accéder à un espace intérieur (18) dans la carrosserie du véhicule (12) à travers l'ouverture, et une structure de support permettant de supporter la fermeture (16) sur la carrosserie (12) ;
la structure de support incluant au moins un élément de sollicitation de contrepoids (26) permettant de maintenir la fermeture dans la position pleinement ouverte, le au moins un élément de sollicitation de contrepoids (26) étant capable de déplacer la fermeture (16) contre son propre poids vers la position pleinement ouverte seulement une fois que la fermeture (16) s'est déplacée sur une amplitude de mouvement initiale de la position fermée vers la position pleinement ouverte, et un verrou (24) permettant de maintenir sélectivement la fermeture (16) dans la position fermée,
**caractérisé en ce que** le procédé comprend les étapes consistant à :
fournir un mécanisme de libération actionnable à distance pour le verrou (24) ;
fournir un agencement d'actionneur (28) capable de déplacer la fermeture (16) de sa position fermée seulement dans la mesure où une position partiellement ouverte à laquelle le au moins un élément de sollicitation de contrepoids (26) est capable de soulever la fermeture (16) vers sa position pleinement ouverte, et un système de commande incluant une unité de commande permettant de commander l'activation du mécanisme de libération du verrou (24) et l'agencement d'actionneur (28) ;
le procédé incluant en outre les étapes consistant à utiliser l'unité de commande pour amener la fermeture (16) à s'ouvrir en activant le mécanisme de libération du verrou (24) pour déverrouiller la fermeture (16) et activer l'agencement d'actionneur (28) pour déplacer la fermeture (16) de sa position fermée vers ladite position partiellement ouverte en réponse à une entrée indiquant que la fermeture (16) doit s'ouvrir ;
et laisser la fermeture (16) se soulever de la position partiellement ouverte à la position pleinement ouverte exclusivement par le au moins un élément de sollicitation de contrepoids (26).

14. Procédé d'ouverture d'une fermeture (16) sur un véhicule (10) selon la revendication 13, dans lequel l'agencement d'actionneur comprend au moins une unité d'actionneur (28) montée sur la carrosserie de véhicule (12) et comportant un vérin (32) pouvant être déployé depuis une position rétractée pour contact avec la fermeture (16).

15. Procédé d'ouverture d'une fermeture (16) sur un véhicule (10) selon la revendication 13 ou la revendication 14, dans lequel le système de commande comprend un dispositif d'entrée utilisateur connecté à l'unité de commande, le procédé comprenant l'étape consistant à utiliser l'unité de commande pour amener la fermeture (16) à s'ouvrir en réponse à une sortie du dispositif d'entrée utilisateur ; **caractérisé en ce que** le dispositif d'entrée utilisateur comprend une unité de télécommande (50) qui peut être portée par un utilisateur pour envoyer un signal (52) à l'unité de commande à bord du véhicule (10), le procédé comprenant l'étape consistant à activer l'unité de télécommande (50) pour envoyer un signal (52) à l'unité de commande.
